# EUROPÄISCHE PATENTSCHRIFT

(11) **EP 1 940 008 B1**
(45) Veröffentlichungstag und Bekanntmachung des Hinweises auf die Patenterteilung: **12.04.2017**
(21) Anmeldenummer: 08006736.6
(22) Anmeldetag: 18.02.2005
(51) Int. Cl.: H02K 5/06, H02K 9/14, H02K 5/22, H02K 7/102, H02K 11/33

(54) **Elektromotor und Baureihe von Elektromotoren**
Electric motor and series of electric motors
Moteur électrique et gamme de moteurs électriques

(30) Priorität: 01.04.2004 DE 102004016781; 13.07.2004 DE 102004033745
(43) Veröffentlichungstag der Anmeldung: 02.07.2008
(62) Teilanmeldung aus: 05707522.8
(73) Patentinhaber: SEW-EURODRIVE GmbH & Co. KG, 76646 Bruchsal (DE)
(72) Erfinder: Schmidt, Josef, 76676 Graben-Neudorf (DE); Becker, Günter, 76684 Östringen (DE); Pfann, Jochen, 76189 Karlsruhe (DE); Troendle, Karl-Heinz, 76694 Forst (DE)

(56) Entgegenhaltungen:
- EP-A- 0 874 442
- EP-A- 1 589 638
- GB-A- 989 720
- US-A- 5 532 533
- US-A1- 2001 033 113

## Beschreibung

Die Erfindung betrifft einen Elektromotor und eine Baureihe von Elektromotor.

Aus der DE 197 04 226 A1 ist ein Elektromotor bekannt, bei dem auf das Gehäuse des Stators ein Zwischenteil und ein Deckel aufgesetzt ist, wobei im Innenraum eine elektronische Schaltung mit Umrichterfunktionalität vorgesehen ist. Nachteilig ist dabei, dass der Umrichter mittels einer Wärmesperre zum Motor hin wärmeisoliert ist. Somit muss ein leistungsstarker Kühlkörper am Umrichter verbunden sein. Dieser Kühlkörper ist zum Motor hin am Umrichter vorgesehen und benötigt nachteiligerweise ein großes Bauvolumen. Außerdem ist er aufwendig und kostspielig zu fertigen. Insbesondere bei einer Ausführung mit Kühlfingern ist ein großer Aufwand verbunden.

Aus der EP 1 589 638 A1 ist ein elektrischer Motor mit aufgesetzter Steuerung bekannt.

Aus der US 2001 / 0033113 A1 ist eine rotierende elektrische Maschine bekannt.

Aus der US 5 532 533 A1 ist ein Servomotor mit einer integrierten Steuerung bekannt.

Aus der EP 0 874 442 A2 ist ein elektrischer Motor mit verbesserter Luftstromkühleinrichtung bekannt.

Aus der GB 989 720 A ist eine luftgekühlte rotierende elektrische Maschine bekannt.

Der Klemmenkasten, also Anschlusskasten, des Elektromotors ist nicht axial angeordnet sondern seitlich. Seitlich vom Motor ist aber bei manchen Anlagen wenig Bauraum vorhanden.

Der Erfindung liegt daher die Aufgabe zugrunde, einen Elektromotor und eine Baureihe von Elektromotoren weiterzubilden, die verschiedene Varianten umfasst. Dabei sollen aber das Lagervolumen und die Kosten verringerbar werden.

Erfindungsgemäß wird die Aufgabe bei dem Elektromotor nach den in Anspruch 1 und bei dem Baukasten, also einer Baureihe, nach den in Anspruch 7 angegebenen Merkmalen gelöst.

Wichtige Merkmale der Erfindung bei dem Elektromotor sind, dass er zumindest einen Stator, einen Rotor, ein Gehäuse, eine Bremse und/oder einen Lüfter umfasst,
wobei das Gehäuse mindestens eine erste mechanische Schnittstelle aufweist, die zum Verbinden mit einem Lagerschild vorgesehen ist,
wobei das Lagerschild zumindest einen Lagersitz für das B-seitige Lager der Rotorwelle umfasst,
wobei das Lagerschild eine weitere Schnittstelle zur Verbindung mit einem Unterteil umfasst,
wobei das Lagerschild gehäusebildend für die Bremse und/oder den Lüfter ist,
wobei Unterteil eine Schnittstelle zur Verbindung mit einem Deckel aufweist,
wobei das Unterteil gehäusebildend für zumindest eine Leistungselektronik ist, deren Wärme direkt oder zumindest indirekt an das Unterteil abführbar ist,
wobei das Unterteil derart wärmeleitend mit dem Lagerschild verbunden ist, dass Wärme der Leistungselektronik vom Lagerschild an die Umgebungsluft abführbar ist,
wobei das Lagerschild Anschlussvorrichtungen und/oder Zentriervorrichtungen aufweist für weitere, axial B-seitig anordenbare Geräte oder Vorrichtungen,
wobei die Geräte oder Vorrichtungen mindestens eine drehende Komponente umfassen, die mit der Rotorwelle des Elektromotors direkt oder indirekt verbunden ist, und mindestens eine nicht-drehende Komponente, die mit dem Lagerschild verbunden ist und/oder an diesem zentriert ist,
wobei die Geräte oder Vorrichtungen Winkelsensoren sind, insbesondere feinauflösende Winkelsensoren.

Von Vorteil ist dabei, dass kein spezieller Kühlkörper notwendig ist, sondern das B-seitige Lagerschild des Elektromotors zur Wärmeabfuhr verwendbar ist. Somit ist der gesamte Elektromotor kompakter ausführbar und insbesondere der seitliche Bauraum gering.

Unter Leistungselektronik wird dabei zumindest derjenige Teil der elektronischen Komponenten verstanden, welche die Motorströme beeinflussen, insbesondere schalten, können. Üblicherweise tritt bei einer abgebbaren Motorleistung von mehr als 500 W eine letztendlich an die Umgebung abzuführende Wärmeverlustleistung der Leistungselektronik von mehr als 20 W, insbesondere bis 300 W auf. Je kW der Motorleistung erhöht sich die abzuführende Wärmeverlustleistung um einen Wert zwischen 20 und 80 Watt.

Vorteiligerweise ist mit der Erfindung ein Baukasten ausbildbar, dass die Elektromotoren zumindest einen Stator, Rotor und ein Gehäuse umfassen,
wobei der Baukasten mehrere Varianten von Elektromotoren umfasst, insbesondere innerhalb einer Baugröße,
wobei das Gehäuse eine mechanische Schnittstelle aufweist, die zum Verbinden mit einem Lagerschild ausgeführt ist,
wobei das Lagerschild zumindest einen Lagersitz für das B-seitige Lager der Rotorwelle umfasst,
wobei mindestens zwei verschiedene Lagerschilde alternativ an das Gehäuse verbindbar sind,
wobei ein erstes Lagerschild eine weitere Schnittstelle zur Verbindung mit einem Klemmenkastenunterteil oder alternativ mit einem Unterteil für einen Leistungselektronik umfasst,
und wobei das erste Lagerschild gehäusebildend für eine Bremse und/oder einen Lüfter ist,
wobei ein zweites Lagerschild einstückig mit einem Klemmenkastenunterteil ausgeführt ist.

Von Vorteil ist dabei, dass mit möglichst wenigen Bauteilen viele verschiedene Varianten herstellbar sind. Für jede Anforderung an Funktionalität ist unter Verwendung möglichst weniger Komponenten eine möglichst kompakte Ausführung erreichbar. Wichtig ist dabei, dass der Baukasten, also die Baureihe, nur Lagerschilde mit verschiedenen Schnittstellen vorsieht. Das Gehäuse des Stators bleibt unverändert. Somit ist dieses stets bei allen Varianten der Baureihe verwendbar. Die Schnittstellen des Lagerschildes zum Gehäuse des Stators hin ermöglicht den Anbau verschiedener Lagerschilde. Bei einem dieser Lagerschilde ist ein Klemmenkasten integrierbar, beim anderen lösbar verbindbar und alternativ gegen einen Umrichter austauschbar. Die letztgenannte Schnittstelle zum Klemmenkasten hin ist sogar um 90° versetzt orientierbar als die Schnittstelle zum Stator hin. Sie muss also nicht koaxial angeordnet sein.

Vorteil ist auch, dass das B-Lagerschild und nicht das Gehäuse des Stators zum Variieren innerhalb der Baureihe verwendet wird. Denn es wird dadurch nicht nur erreicht, dass Stator und Rotorpaket stets gleichartig aufgebaut sind, sondern dass je nach Anforderung verschiedene Bauvolumen des Lagerschildes zusammen mit dem Klemmenkasten beziehungsweise Umrichtergehäuses fällt im B-seitigen Bereich an. In der Mehrzahl der Maschinen und Anlagen, in welche Elektromotoren eingebaut werden ist aber im B-seitigen Bereich mehr Volumen zur Verfügung als im A-seitigen Bereich oder im Bereich über dem axial vorderen, also A-seitigeren Bereich des Gehäuses des Stators. Darüber hinaus ist im B-seitigen Bereich ein einfacherer Zugang bei Wartungsarbeiten möglich als im A-seitigen Bereich.

Weiter vorteilig ist, dass die Verbindungen mittels Dichtungen dicht und lösbar ausführbar sind. Somit ist hohe Schutzart erreichbar, insbesondere zumindest IP65.

Die Schnittstellen des Lagerschildes sind zur mechanischen Verbindung mit den genannten Teilen vorgesehen. Darüber hinaus weist das Lagerschild aber auch noch weitere Funktionen auf, nämlich insbesondere die Wärmeableitfunktion für Leistungselektronik aus dem Klemmenkasten- oder Umrichter-Innenraum. In jedem Fall ist vom Lagerschild stets eine gehäusebildende Funktion für einen mit der Rotorwelle mitdrehenden Lüfter ausführbar. Dieser führt kühle Umgebungsluft zu und erhöht somit den vom Lagerschild an die Umgebung fließenden Wärmestrom.

Weiter integrierte Funktionalität des Lagerschildes ist die Führungsvorrichtung für die Ankerscheibe und Reibscheibe der gegebenenfalls vorhandenen Bremse in axialer Richtung. Das Lagerschild vereint also auch die mechanischen Funktionen der Haltekraft für das B-seitige Lager und die mechanischen Führungskräfte für die Komponenten der Bremse, wie Ankerscheibe und dergleichen.

Bei einer vorteilhaften Ausgestaltung ist ein Gehäusedeckel mit dem Unterteil, Klemmenkastenunterteil oder Lagerschild mit einstückigem Klemmenkastenunterteil verbunden. Von Vorteil ist dabei, dass ein dicht in hoher Schutzart abgeschlossener Innenbereich für empfindliche Elektronik vorsehbar ist.

Bei einer vorteilhaften Ausgestaltung ist das Unterteil oder Klemmenkastenunterteil auf das Lagerschild in mindestens zwei verschiedenen Orientierungen verbindbar, insbesondere in 90° gegeneinander versetzt Orientierungsrichtungen. Von Vorteil ist dabei, dass je nach Anforderung der Applikation, also Bauform der Maschine oder Anlage, die optimale Ausrichtung wählbar ist.

Bei einer vorteilhaften Ausgestaltung ist statt der Umrichterelektronik eine Sanftanlaufelektronik vorgesehen. Von Vorteil ist dabei, dass Kosten einsparbar sind, da eine Sanftanlaufelektronik einen geringeren Entwicklungsaufwand aufweist und auch mit weniger Bauteilen herstellbar ist.

Bei einer vorteilhaften Ausgestaltung weist zumindest das erste Lagerschild eine fein bearbeitete Kontaktfläche zur wärmeleitenden Verbindung mit der Leistungselektronik auf.

Von Vorteil ist dabei, dass das Lagerschild als mechanische Befestigung und wärmeableitende Vorrichtung verwendbar ist.

Bei einer vorteilhaften Ausgestaltung ist die Leistungselektronik mit dem Lagerschild wärmeleitend zur Abfuhr von Wärme an die Umgebung verbunden. Von Vorteil ist dabei, dass die Wärme an ein Teil abgeführt wird, das von einem Kühlluftstrom abkühlbar ist.

Bei einer vorteilhaften Ausgestaltung ist das zweite Lagerschild mit einem Sensor ausgeführt, der am Umfang des Lüfters physikalische Eigenschaften des Lüfters oder einer mit diesem verbundenen Komponente detektiert. Von Vorteil ist dabei, dass der Lüfter einen größeren Durchmesser als die Rotorwelle aufweist und somit die Winkelauflösung verbessert ist. Außerdem ist kein kostspieliges aufwendiges Gebersystem notwendig sondern es genügt ein Magnetring oder eine Magnet-Folie.

Bei einer vorteilhaften Ausgestaltung ist das erste Lagerschild gehäusebildend für eine elektromagnetisch betätigbare Bremse und/oder einen Lüfter. Von Vorteil ist dabei, dass das Lagerschild gekühlt wird. Außerdem ist kein zusätzliches Gehäuse für die Bremse notwendig.

Bei einer vorteilhaften Ausgestaltung ist das erste und zweite Lagerschild jeweils verbindbar mit einem gleichartigen Lüfterhaubengitter. Von Vorteil ist dabei, dass dasselbe Lüfterhaubengitter mehrfach verwendbar ist innerhalb der Baureihe.

Bei einer vorteilhaften Ausgestaltung ist das Gehäuse des Stators A-seitig mit einem Lagerschild verbindbar, das einen Lagersitz zur Aufnahme des A-seitigen Lagers der Rotorwelle umfasst. Von Vorteil ist dabei, dass der gesamte Elektromotor drei Haupt-Gehäuseteile aufweist, nämlich das Gehäuse des Stators und die beiden Lagerschilde. Wenn nun ein Elektromotor mit größerem Drehmoment erforderlich ist, ist nur die Rotorwelle mit Rotor, der Stator und das Gehäuse des Stators auszutauschen gegen beispielhaft axial länger ausgeführte Teile, wobei die restlichen Teile beibehalten werden können.

Bei einer vorteilhaften Ausgestaltung weist das Lagerschild Führungsvorrichtungen auf für die axiale Führung der Ankerscheibe der Bremse, insbesondere dass die Führungsvorrichtungen als Ausnehmungen ausgeführt sind. Von Vorteil ist dabei, dass kein spezielles Teil zur Ausführung der Führungsfunktion notwendig ist, sondern diese Funktion in das Lagerschild mitintegrierbar ist.

Weitere Vorteile ergeben sich aus den Unteransprüchen.

Die Erfindung wird nun anhand von Abbildungen näher erläutert:
In der Figur 1a und 1b ist ein erfindungsgemäßer Elektromotor mit Bremse und Lüfter in Draufsicht und Schnittansicht gezeichnet.
In der Figur 2a und 2b ist ein erfindungsgemäßer Elektromotor mit Bremse und Lüfter in Draufsicht und Schnittansicht gezeichnet, bei dem ein den Klemmenkasten ersetzendes Unterteil vorgesehen ist, das zusammen mit dem aufsetzbaren Deckel eine Elektronik mit Umrichterfunktionalität umfasst.
In der Figur 3a und 3b ist ein erfindungsgemäßer Elektromotor mit Bremse und Lüfter in Draufsicht und Schnittansicht gezeichnet, wobei der Klemmenkasten einstückig ausgeführt ist mit dem B-seitigen Lagerschild.
In der Figur 4a und 4b ist ein erfindungsgemäßer Elektromotor mit Bremse und Lüfter in Draufsicht und Schnittansicht gezeichnet, wobei der Klemmenkasten einstückig ausgeführt ist mit dem B-seitigen Lagerschild und der Lüfter einen Geberring trägt, der von einem Sensor detektierbar ist.
In der Figur 5a und 5b ist ein erfindungsgemäßes Lagerschild in Draufsicht und Schnittansicht gezeichnet.
In Figur 6a und 6b ist das Lagerschild mit verbundenem Klemmenkasten gezeigt.
In Figur 7a und 7b ist ein zugehöriger Elektromotor gezeigt.
In Figur 8a und 8b ist zusätzlich ein Sensor gezeigt.
In Figur 9a und 9b ein Elektromotor mit Lüfter, aber ohne Bremse gezeigt.

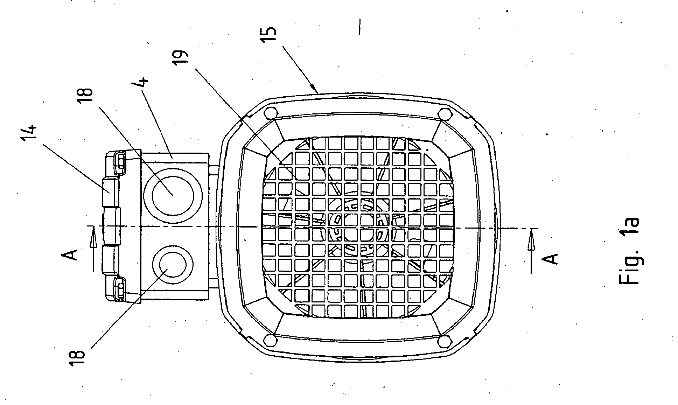

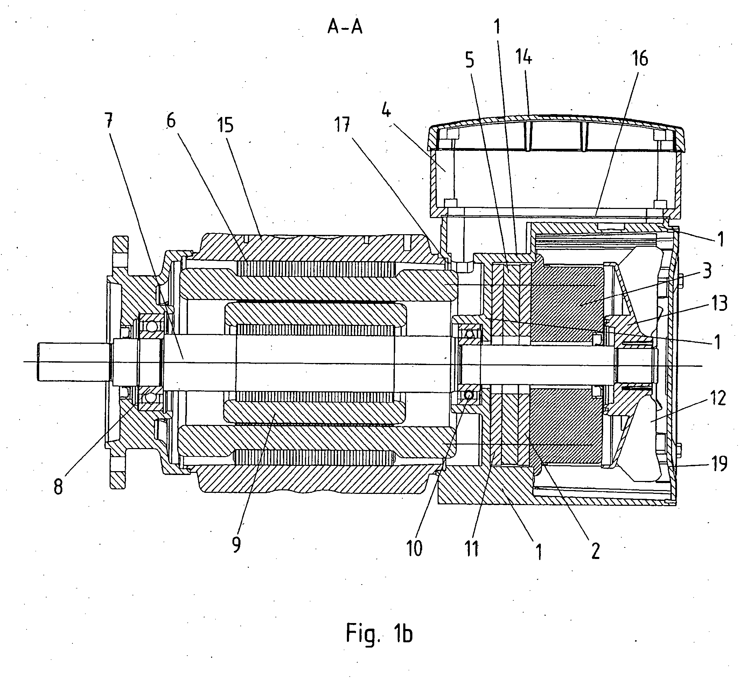

In der Figur 1a und 1b ist ein erfindungsgemäßes Lagerschild 1 eines Elektromotors mit Bremse gezeigt. Das Lagerschild weist einen Lagersitz für das B-seitige Lager 10 des Elektromotors auf. Dazu ist der Lagersitz geeignet bearbeitetet. Der Elektromotor umfasst eine Statorwicklung 6, die innerhalb des Gehäuses 15 vorgesehen ist und eine Rotorwelle 7, die A-seitig über das Lager 8 im A-seitigen Lagerschild und B-seitig über das Lager 10 im B-seitigen Lagerschild gelagert ist. Der Rotor 9, umfassend Rotorwelle 7 und Rotorpaket, ist als Kurzschlussläufer ausgeführt zur Bildung eines Asynchronmotors. Bei weiteren erfindungsgemäßen Ausführungsbeispielen ist der Rotor aber auch zur Bildung eines Synchronmotors, Reluktanzmotors oder eines anderen Motors ausführbar.

Die Rotorwelle trägt an ihrem B-seitigen Ende einen Lüfter 13 mit Lüfterflügeln 12. Axial davor ist eine Bremse vorgesehen, die eine im Magnetkörper 3 sich befindende Bremsspule und eine axial bewegbare Ankerscheibe 2 umfasst. Die Ankerscheibe 2 wird bei Bestromung der Bremsspule zu dieser hingezogen, wobei gegenwirkende Federkraft von sich im Magnetkörper abstützenden Federelementen überwunden wird. Bei Nichtbestromung drücken daher die Federelemente derart auf die Ankerscheibe, dass diese auf den Belagträger gedrückt wird, welcher auf beiden axial orientierten Flächen Bremsbeläge trägt. Der Belagträger ist außerdem in radialer und in Umfangsrichtung formschlüssig mit der Rotorwelle 7 verbunden. Somit drückt die Ankerscheibe 2 bei Nichtbestromung der Bremsspule den Belagträger 5 auf die axial nach dem Belagträger angeordnete Reibscheibe 11.

Das Gehäuse 15 des Elektromotors weist zum Lagerschild 1 hin eine mechanische Schnittstelle auf, so dass das Lagerschild 1 mit dem Gehäuse 15 dicht, fest und genau verbindbar ist. Das Lagerschild 1 weist selbstverständlich eine entsprechend passende Schnittstelle auf.

Das Lagerschild 1 weist eine weitere elektrische Schnittstelle zum als Anschlusskasten ausgeführten Klemmenkasten hin auf. Dieser besteht aus einem Gehäusedeckel 14 und einem Klemmenkastenunterteil 4, das mit dem Lagerschild 1 dicht und fest verbindbar ist. Dabei ist im Verbindungsbereich eine Dichtung 16 vorgesehen.

Die Schnittstelle zwischen dem Gehäuse 15 und dem Lagerschild 1 ist ebenfalls zur dichten Verbindung ausführbar. Dazu ist die Dichtung 17 vorgesehen.

Das Klemmenkastenunterteil 4 weist als Kabelaustrittsöffnungen ausgeführte KabelVerschraubungen 18 auf. Alternativ sind bei weiteren erfindungsgemäßen Ausführungsbeispielen die Kabelverschraubungen im zugehörigen Deckel vorgesehen. Die Dichtungen 17, 16 sind auch derart ausführbar, dass sie eine Wärmesperrenfunktion ausführen. Somit ist der Wärmeaustausch zwischen den metallischen Teilen, nämlich Gehäuse 15 und Lagerschild 1, stark verringerbar. Ebenso ist der Wärmeaustausch zwischen Lagerschild und Klemmenkastenunterteil stark verringerbar.

Eine zusätzliche Maßnahme zur Verringerung dieses Wärmeaustausches ist bei anderen erfindungsgemäßen Ausführungsbeispielen, das Klemmenkastenunterteil 4 nicht aus Metall sondern aus einem Kunststoff oder einem anderen thermischen Isolator zu fertigen. Die Dichtung 16 ist bei weiteren erfindungsgemäßen Ausführungsbeispielen nicht nur als Flachdichtung oder O-Ring ausführbar sondern auch als wärmeisolationswirksames Spritzgussteil, das den Raumbereich des Lagerschildes 1 samt Bremse und Lüfter abtrennt vom Innenraum des Klemmenkastenunterteils oder auch vom Deckel 14.

B-seitig weist das Lagerschild 1 eine Öffnung zum Durchlass von Luft auf. Diese ist aus Sicherheitsgründen von einem Lüfterhaubengitter 19 abgeschlossen.

Zwischen Klemmenkastenunterteil 4 und zugehörigem Deckel 14 gemäß Figur 1 a und 1b ist ebenfalls eine Dichtung vorgesehen. Diese ist in erfindungsgemäßen Ausführungsbeispielen derart wärmeleitend ausgeführt, dass Wärme der elektronischen Schaltung über den Deckel nicht nur an die Umgebung sondern auch an das Klemmenkastenunterteil abführbar ist. Die Wärmeleitung erfolgt dabei über die Kontaktflächen des Klemmenkastenunterteils 4 und zugehörigem Deckel 14, welche sich um den Raumbereich der Dichtung selbst herum erstrecken, wobei die Dichtung als Flachdichtung, O-Ring oder Ähnliches, ausführbar ist. Vom Deckel ist dann Wärme abführbar ans Lagerschild und an die Umgebung, da es gehäusebildende Funktion hat. Bei einem anderen erfindungsgemäßen Ausführungsbeispiel wird ganz im Gegensatz dazu die Dichtung nicht wärmeleitend sondern wärmesperrend ausgeführt, wobei dann die Kontaktflächen hierfür klein vorgesehen werden und gegebenenfalls eine zusätzliche Wärmesperre eingebracht ist.

Die Dichtung 16 ist aber bei anderen erfindungsgemäßen Ausführungsbeispielen auch wärmeleitend vorsehbar, insbesondere können die metallischen Kontaktflächen, welche um den Raumbereich der Dichtung herum vorgesehen sind, vergrößert ausgeführt werden und somit kann eine genügend große Berührfläche vorgesehen werden, welche zu einer Verringerung des Wärmeübergangswiderstandes führt. Dies hat zum Vorteil, dass das Lagerschild 1 und das Klemmenkastenunterteil gut wärmegekoppelt sind, also einen geringen Wärmeübergangswiderstand aufweisen. Somit ist die Wärme von der elektronischen Schaltung übers Klemmenkastenunterteil nicht nur an die Umgebung sondern auch an das Lagerschild abführbar. Daher ist ein speziell geformter Kühlkörper nicht notwendig und insgesamt ein geringeres Bauvolumen, insbesondere seitlich, notwendig.

Bei anderen erfindungsgemäßen Ausführungsbeispielen ist auch die Dichtung 17 wärmeleitend ausführbar. Dies ist immer dann vorteilhaft, wenn im Stator und dem zugehörigen Gehäuse die Temperatur stets geringer ist als im Bereich des Lagerschildes und somit Wärme zum Stator und seinem Gehäuse zuführbar ist. Somit ist der gesamte Elektromotor noch kleiner ausführbar.

Vorteil bei der Erfindung ist, dass das Lagerschild 1 mit den genannten zwei definierten Schnittstellen ausgestattet ist. Somit sind auch andere Komponenten anstatt der in Figur 1a und 1b gezeigten verbindbar.

Bei der Erfindung ist die Elektronik nicht in axialer Richtung sondern radial, also seitlich, angeordnet. Vorteilig ist dabei, dass die Baulänge gering gehalten wird. Seitlich ist bei Maschinen und Anlagen meist ein gewisses Volumen frei und für den Bediener zugänglich, weil der Anschlusskasten des Motors meist seitlich liegt und die Baulänge kostspieliger ist hinsichtlich der Gesamtkosten. Das seitlich freie Volumen wird durch die Erfindung genutzt und nur unwesentlich mehr Bauraum in seitlicher Richtung benötigt. Insbesondere die Kühlung mittels Lüfter ermöglicht eine kleine Ausführung der Elektronik und bewirkt somit ein geringes seitliches Bauvolumen. Darüber hinaus ist der Kühlkörper klein ausführbar oder vernachlässigbar, da Wärme über das Lagerschild des Motors abgeführt wird und von diesem über den vom Lüfter angetriebenen Kühlluftstrom an die Umgebung abgeführt wird.

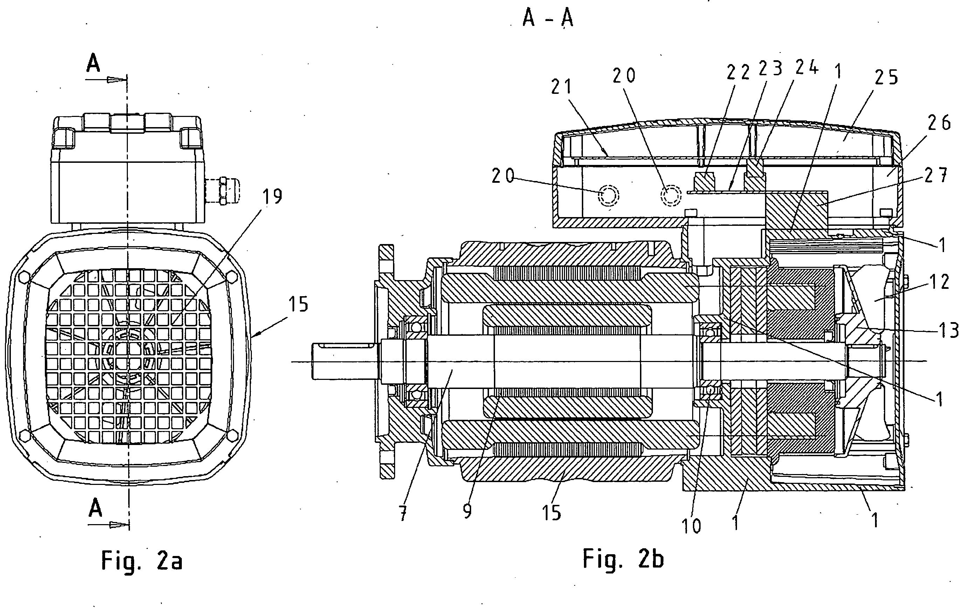

In den Figuren 2a und 2b ist ein anders ausgeformtes Unterteil 26 anstatt des Klemmenkastenunterteils 4 aufgesetzt und dicht lösbar verbunden. Es ragt über in Richtung des Motors. Somit ist Platz geschaffen für Signalelektronik und Leistungselektronik im Innenbereich des Unterteils 26 und Gehäusedeckels 25. Die Versorgungskabel und auch Signalleitungen sowie Bus-Leitungen, insbesondere Feldbus-Leitungen, sind durch KabelVerschraubungen 20 geführt, wodurch der gesamte Elektromotor wie auch der Elektromotor nach Figur 1a und 1b, in hoher Schutzart ausführbar ist, insbesondere mindestens mit IP65. Die Anschlussvorrichtungen 22 sind auf einer Leiterplatte 23 vorgesehen, die im Innenbereich des Unterteils 26 vorgesehen ist.

Weiteres Merkmal der Erfindung ist, dass das axiale Ende des Deckels und des Unterteils 26 an im Wesentlichen derselben axialen Position abgeschlossen ist wie die Lüfterhaube.

Im Innenbereich ist eine Leiterplatte 21 vorgesehen, die mit dem Gehäusedeckel lösbar verbunden ist. Sie trägt die Signalelektronik.

Im Unterteil 26 ist eine Leiterplatte 23 mit Leistungselektronik 27 angeordnet, die ein Steckverbinderteil für eine elektrische Steckverbindung mit einem weiteren Steckverbinderteil trägt, wobei das weitere Steckverbinderteil mit der Leiterplatte 21 verbunden ist. Die Leistungselektronik 27 ist wärmeleitend mit dem Lagerschild 1 verbunden. Dazu weist das Lagerschild eine fein bearbeitete Fläche auf, die als Kontaktfläche verwendbar ist. Zur Verbesserung des Wärmeübergangswiderstandes ist auch Wärmeleitpaste hinzufügbar.

Somit ist das Lagerschild 1 als multifunktionales Teil ausgeführt. Es weist also nicht nur die genannten mechanischen Schnittstellen auf sondern es dient auch zur Ableitung der Wärme der Leistungselektronik an die Umgebung. Zur Verbesserung dieser Ableitung von Wärme ist es vorteilhaft, dass das Lagerschild durch den Lüfter eine zusätzliche aktive Zufuhr von Kühlluft aus der Umgebung erfährt. Somit ist nicht nur der Stator des Elektromotors sondern auch die Leistungselektronik 27 kühlbar.

Die Signalelektronik und Leisturigselektronik sind zusammen als Umrichter ausgeführt. Somit ist der Stator des Elektromotors von diesem Umrichter versorgbar und daher der gesamte Elektromotor vom Umrichter aus steuerbar. Vorteiligerweise wird der Umrichter mit Drehstrom versorgt.

Die Leistungselektronik umfasst dabei zumindest den Gleichrichter und die pulsweitenmoduliert ansteuerbare Endstufe, also den Wechselrichter, der aus der gleichgerichteten Spannung eine Wechselspannung mit einer von der Steuerungselektronik vorgegebenen Frequenz erstellt. Die zugehörigen elektronischen Leistungsschalter geben die von ihnen erzeugte Wärme an einen Träger ab, der wiederum mit dem Leistungsschild 1 wärmeleitend verbunden ist. Der Träger ist mechanisch mit dem Lagerschild verbindbar, insbesondere kraftschlüssig.
Bei weiteren erfindungsgemäßen Ausführungsbeispielen ist die Leistungselektronik wärmeleitend mit dem Deckel verbunden, der eine zur Wärmeübertragung geeignete Kontaktfläche aufweist..

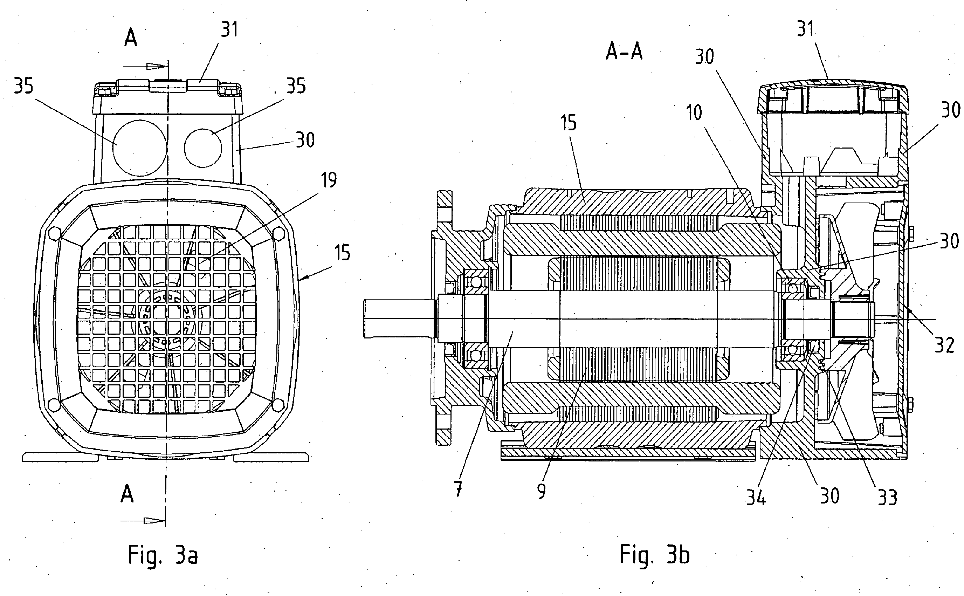

In den Figuren 3a und 3b ist derselbe Stator mit dem Gehäuse 15 vorgesehen, wobei aber ein anderes Lagerschild 30 verbunden ist. Das Lagerschild 30 weist wiederum dieselbe Schnittstelle zum Stator und dem Gehäuse 15 hin auf. Jedoch ist der Klemmenkasten einstückig mit dem Lagerschild 30 ausgeführt. Dies erniedrigt die Fertigungskosten. Ein Gehäusedeckel 31 ist ebenso vorgesehen. Weil keine Bremse vorgesehen ist und wegen der einstückigen Ausführung und dem damit verbundenen Verzicht auf Befestigungsmittel, ist der Elektromotor insgesamt sehr viel kompakter ausführbar.

Das Lüfterhaubengitter 32 ist gleichartig ausführbar zum Lüfterhaubengitter 19 der Figuren 1a, 1b, 2a und 2b.

Die Labyrinthdichtung 33 und der Wellendichtring 34 ermöglichen wiederum die Ausführbarkeit in hoher Schutzart, insbesondere zumindest IP65. Die Labyrinthdichtung 33 dichtet zwischen dem Lagerschild und dem drehbaren Lüfter ab, wobei nur äußerst geringe Reibungsverluste auftreten. Der Wellendichtring 34 erhöht die Abdichtfunktion deutlich. Auch durch die einstückige Ausformung eines Klemmenkastenunterteils ist eine hohe Dichtheit und Schutzart mit einfachen Mitteln in kostengünstiger Weise erreichbar.

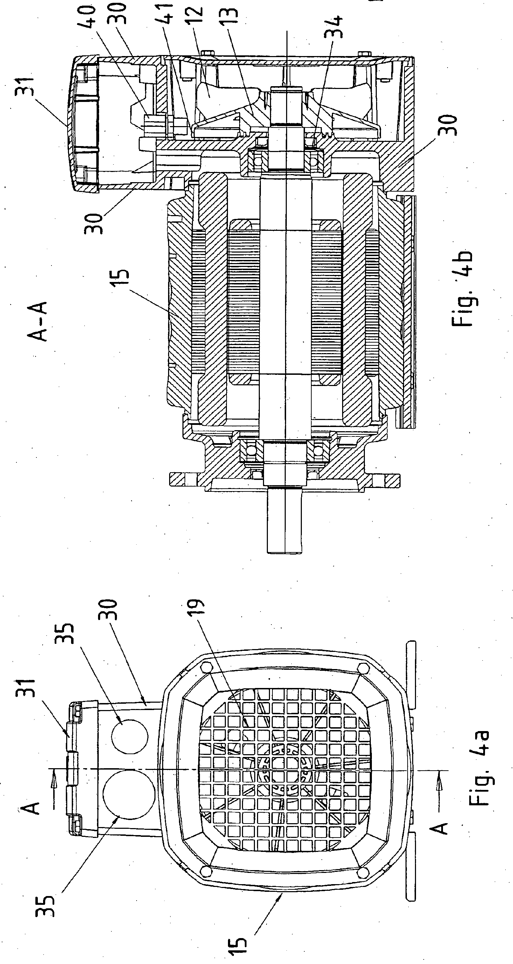

In den Figuren 4a und 4b ist wiederum eine andere Variante gezeigt. Dabei ist das Lagerschild 30 der Figur 3a und 3b wiederverwendet. Ebenso ist der Stator und das Gehäuse 15 dasselbe. Jedoch ist nun ein Sensor vorgesehen, der am Lagerschild lösbar mechanisch verbunden ist und elektrisch mit einer elektronischen Schaltung verbunden ist, die im Innenbereich oder Außenbereich des Klemmenkastens vorsehbar ist. Im letztgenannten Fall sind die Signalleitungen des Sensors durch die Kabelverschraubungen 35 des Klemmenkastens herausgeführt. Der Sensor detektiert Magnet-Folie 41, die auf dem Lüfter aufgebracht ist und am Umfang mit abwechselnder Magnetisierungsrichtung vorgesehen ist. Alternativ ist vorzugsweise ein kunststoffgebundener Ferrit mit abwechselnder Magnetisierungsrichtung verwendbar.

Vorteilig bei der Erfindung ist, dass eine Baureihe von Elektromotoren geschaffen ist, die je nach Applikation des Motors verschiedene Varianten herstellbar vorsieht, wobei aber innerhalb dieses Baukastens möglichst viele Teile wiederverwendbar sind. Beispielsweise ist immer derselbe Stator samt Gehäuse 15 mit verschiedenen Lagerschilden verbindbar, wobei ein erstes Lagerschild eine Bremse und einen Lüfter umfasst und ein zweites Lagerschild nur einen Lüfter umfasst. Außerdem ist das erste Lagerschild mittels seiner nach oben gerichteten Schnittstelle verbindbar mit einem Klemmenkasten, also Anschlusskasten, oder mit einem Umrichter oder mit einem andersartigen elektronischen Gerät.

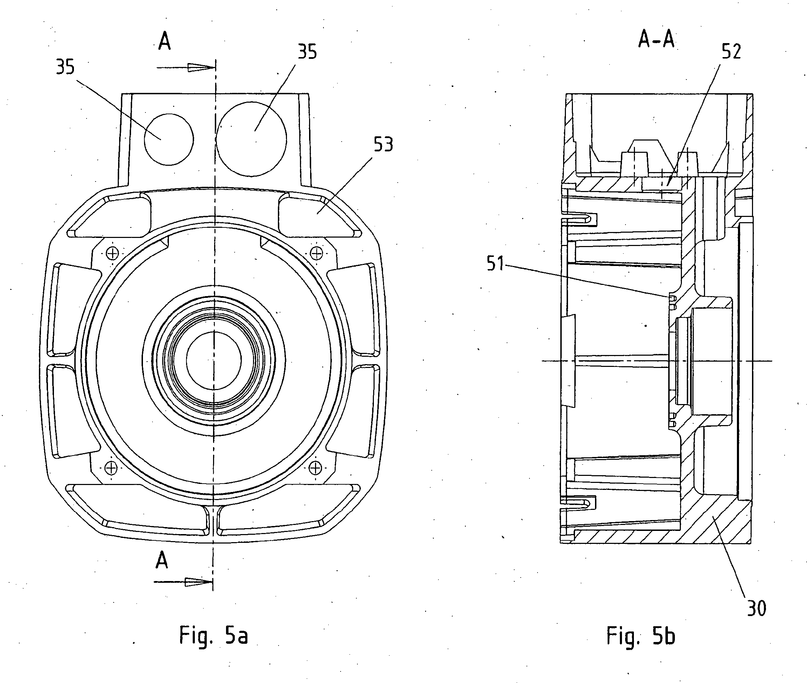

In der Figur 5a und 5b ist ein erfindungsgemäßes Lagerschild in Draufsicht und Schnittansicht gezeichnet, wobei ein Klemmenkasten angegossen ist. Dabei weist das Lagerschild Vertiefungen 51 für Labyrinthdichtung auf. Das Knockout 52 ist nach Herstellung des Lagerschildes vorhanden und ist in einfacher Weise leicht entfernbar, wenn eine Ausnehmung zur Aufnahme des Sensors erforderlich ist. Bloßes Drücken mit einem Werkzeug genügt. Durch die Ausnehmungen 53 strömt die vom Lagerschild erwärmte Kühlluft hindurch.

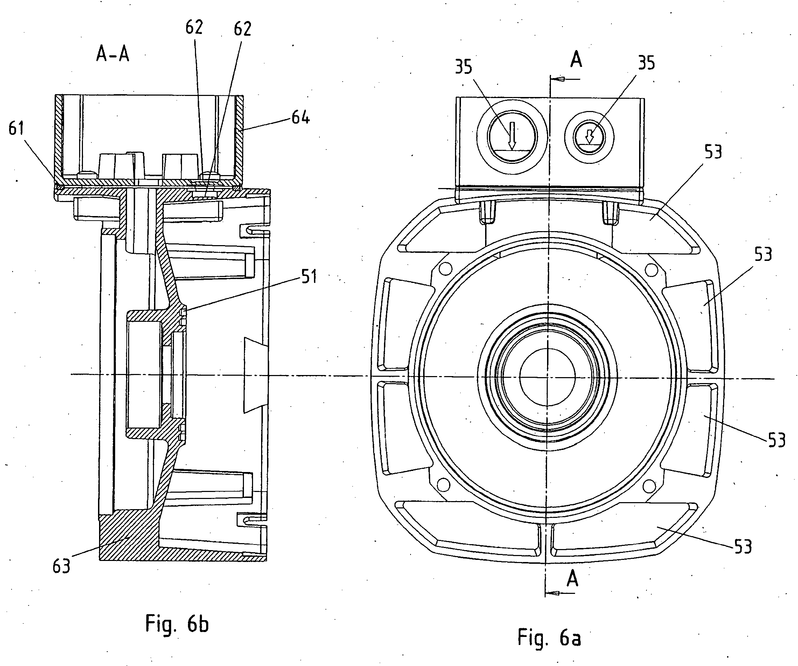

In Figur 6a und 6b ist ein alternatives erfindungsgemäßes Lagerschild 63 gezeigt, wobei der Klemmenkasten 64 separat ausgebildet ist. Zur Herstellung einer dichten Verbindung mit dem Lagerschild 63 ist eine Dichtung 61 eingelegt. Außerdem ist der Klemmenkasten an der Schnittstelle zum Lagerschild derart geformt, dass auch ein Formschluss vorgesehen ist, der gleichzeitig die Dichtung schützt, also gehäusebildende Funktion für diese mit ausgeführt ist.

Zur Montage eines Sensors sind die Knockout 62 vorgesehen, die kostengünstig fertigbar sind und beim Montieren in einfacher Weise entfernbar sind.

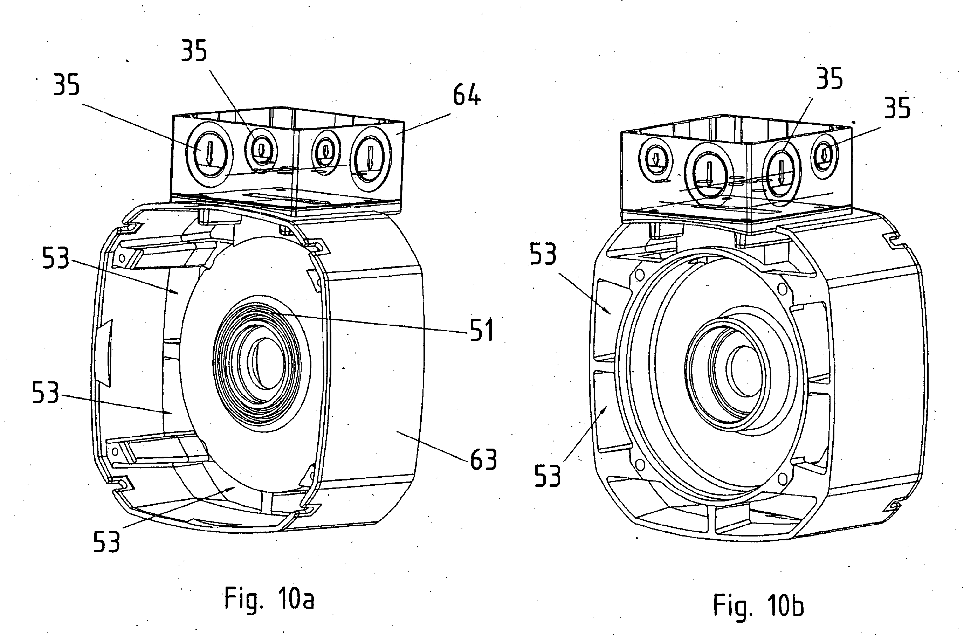

In den Figuren 10a und 10b ist eine räumliche Ansicht von schräg vorne und hinten, die zu dem Lagerschild 63 der Figuren 6a und 6b gehört. Der aufgesetzte und lösbar verbundene Klemmenkasten 64 ist ebenfalls gezeigt. Die Ausnehmungen 53 zur Durchleitung von Luft sind besser zu sehen. Das Lüftergitter, wo die Luft angesaugt wird, ist nicht gezeigt. Die Luft strömt dann am anderen axialen Ende des Lagerschildes 63 derart heraus, dass der Luftstrom über das Gehäuse 15 des Elektromotors geleitet wird und auch dort zur Wärmeabfuhr kühlend wirksam ist.

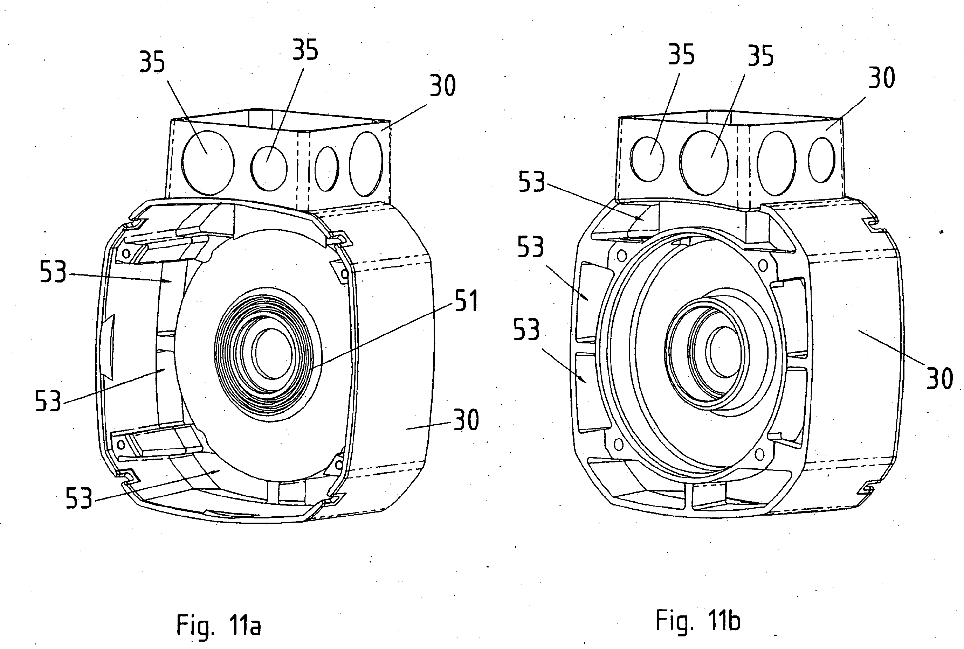

In den Figuren 11a und 11b ist eine räumliche Ansicht von schräg vorne und hinten, die zu dem Lagerschild 30 der Figuren 5a und 5b gehört. Die Ausnehmungen 53 zur Durchleitung von Luft sind besser zu sehen. Das Lüftergitter, wo die Luft angesaugt wird, ist nicht gezeigt. Die Luft strömt dann am anderen axialen Ende des Lagerschildes 63 derart heraus, dass der Luftstrom über das Gehäuse 15 des Elektromotors geleitet wird und auch dort zur Wärmeabfuhr kühlend wirksam ist.

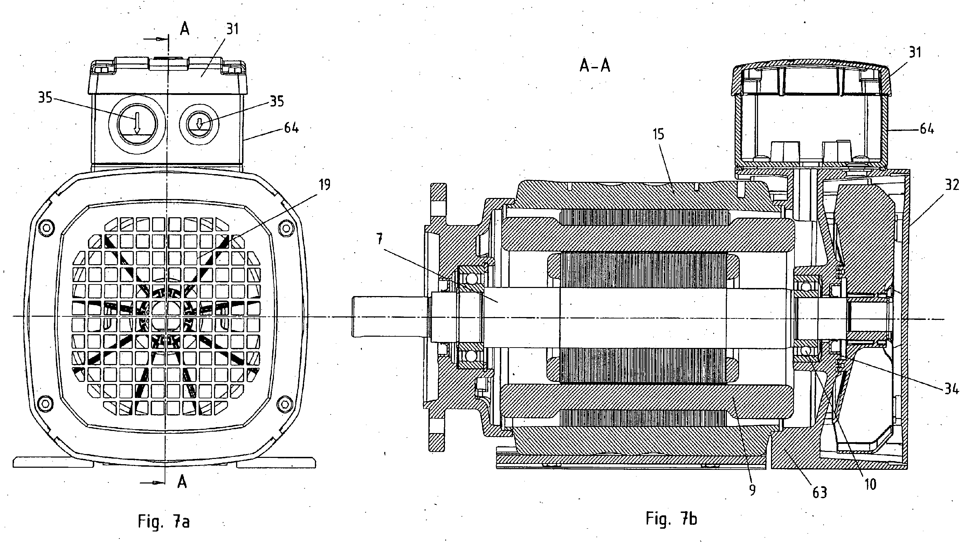

In den Figuren 7a und 7b ist der Elektromotor mit Lüfter aber ohne Bremse vorgesehen. Der Klemmenkasten ist auf das Lagerschild 63 aufgeschraubt und mittels der Dichtung 61 dicht verbunden. Auf den Klemmenkasten 64 ist der Deckel 31 aufgesetzt und dicht verbunden, wobei der Klemmenkasten 64 Kabelverschraubungen 35 umfasst.

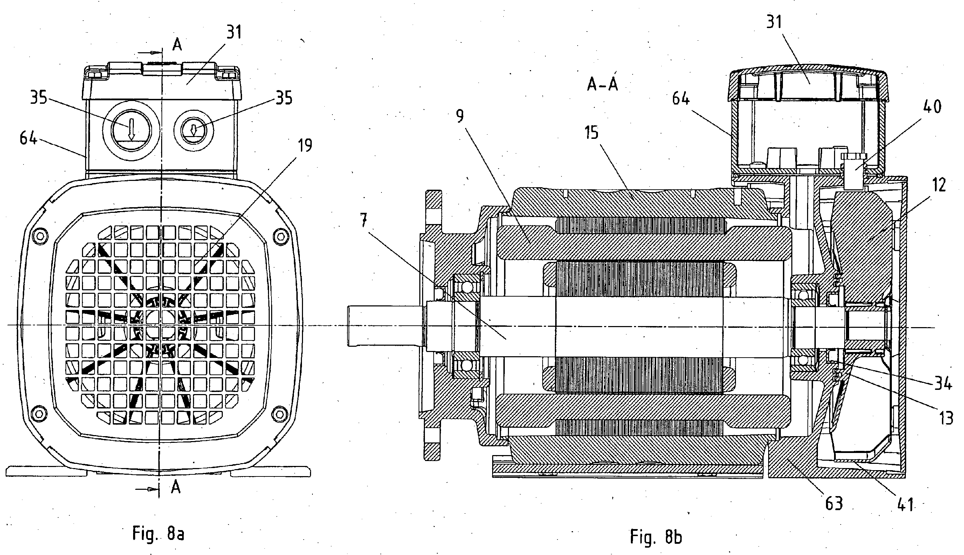

In den Figuren 8a und 8b ist wiederum ein Elektromotor gezeigt, der ähnlich wie in Figur 7a und 7b ausgeführt ist. Allerdings sind die Knockouts 62 entfernt und es ist der Sensor 40 eingesetzt. Der Sensor ist höhenverstellbar montiert. Beispielhaft ist dies mittels zweier Kontermuttern realisiert. Es sind aber auch andere Methoden zur Höhenverstellung vorteilig einsetzbar. Der Sensor 40 ist somit auf optimalen Abstand zum Lüfter einstellbar und kann somit pro Umdrehung entsprechend der Geberfahnen beziehungsweise Lüfterflügel Pulse erzeugen.

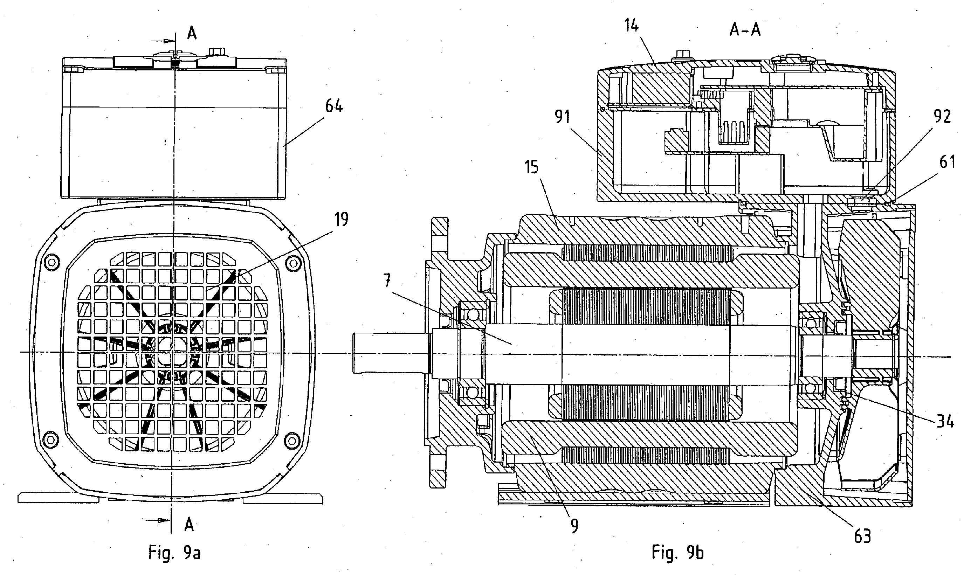

In den Figuren 9a und 9b ist wiederum ein Elektromotor gezeigt, der ähnlich wie in Figur 7a und 7b ausgeführt ist. Jedoch ist statt des Klemmenkastens ein Unterteil 91 aufgesetzt auf das Lagerschild 63. Auf das Unterteil 91 ist ein Gehäusedeckel 14 aufgesetzt. Im vom Unterteil 91 und vom Gehäusedeckel 14 umschlossenen Innenraum ist eine elektronische Schaltung, wie auch in der Beschreibung zu Figur 2a und 2b erwähnt, vorsehbar. Also ist ein Umrichter, eine Sanftanlaufschaltung oder ein Motorschalter oder eine andere elektronische Schaltung realisierbar.

In weiteren erfindungsgemäßen Ausführungsbeispielen ist der Sensor direkt auf der Leiterplatte 23 aufgebracht und die Leiterplatte sehr genau positionierbar. Somit ist es dem Sensor von dieser Anordnung heraus direkt ermöglicht, die abwechselnde Magnetisierungsrichtung am Lüfter zu erkennen. Aus den Sensor-Signalen ist die Ableitung von Informationen über die Drehzahl und Drehrichtung ermöglicht. Somit ist ein verbessertes Steuern und/oder Regeln des Elektromotors ausführbar.

In weiteren erfindungsgemäßen Ausführungsbeispielen ist die Signalelektronik und Leistungselektronik nicht als Umrichter sondern als Sanftanlaufgerät, also Starter, ausgeführt. Somit sind Kosten einsparbar.
Alternativ ist die Signalelektronik und Leistungselektronik als Schalter zum An- oder Abschalten des Motors ausführbar, wobei der Schalter elektromechanisch oder elektronisch ausführbar ist.

Auch andere Motorelektronik ist als Signalelektronik und Leistungselektronik vorsehbar. Beispielsweise ist die Motorelektronik als Spannungsanpassungsmodul für den Motor und/oder die Bremse oder als Weitspannungsmodul für den Motor und/oder die Bremse ausführbar.

In anderen erfindungsgemäßen Ausführungsbeispielen ist zumindest ein Teil der Leistungselektronik mit dem Deckel wärmeleitend verbunden. Dazu muss dann der Deckel an seiner Innenseite derart bearbeitet sein, dass die Wärme von der Leistungselektronik an ihn übertragbar ist. Vorzugsweise ist diese Verbindung kraftschlüssig ausgeführt. Es sind aber auch andere Verbindungsarten vorsehbar.

In anderen erfindungsgemäßen Ausführungsbeispielen umfasst die Signalelektronik auch eine Powerline-Elektronik. Dies bedeutet, dass die elektronische Schaltung in der Lage ist, Informationen auf die Versorgungsleitungen, insbesondere Starkstromleitungen, aufzumodulieren, insbesondere unter Verwendung einer weit höheren Frequenz als 50 Hz. Beispielsweise eigenen sich vorzugsweise Frequenzen zwischen 10kHz und 10 MHz.

Besonders vorteilig ist es, das Lagerschild aus Aluminium-Druckguss herzustellen. In anderen erfindungsgemäßen Ausführungsbeispielen ist es jedoch auch vorteilhaft, das Lagerschild aus wärmeleitender Keramik vorzusehen. Somit ist für die Bremse eine verschleißarme Reibfläche vorsehbar, deren beim Bremsen erzeugte Wärme schnell und einfach vom Lagerschild abführbar ist.

In einem anderen erfindungsgemäßen Ausführungsbeispiel ist auch nur die Reibfläche aus Keramik herstellbar.

Alternativ ist das Lagerschild auch aus Guss, insbesondere Grauguss, herstellbar.

### Bezugszeichenliste

- 1: Lagerschild
- 2: Ankerscheibe
- 3: Magnetkörper
- 4: Klemmenkastenunterteil, Anschlusskastenunterteil
- 5: Belagträger
- 6: Statorwicklung
- 7: Rotorwelle
- 8: A-seitiges Lager
- 9: Rotor
- 10: B-seitiges Lager
- 11: Reibscheibe
- 12: Lüfterflügel
- 13: Lüfter
- 14: Gehäusedeckel
- 15: Gehäuse
- 16: Dichtung
- 17: Dichtung
- 18: Kabel-Verschraubungen als Kabelaustrittsöffnungen
- 19: Lüfterhaubengitter
- 20: Kabel-Verschraubung
- 21: Leiterplatte
- 22: Anschlussvorrichtungen
- 23: Leiterplatte
- 24: elektrische Steckverbindung mit Stecker und Gegensteckvorrichtung
- 25: Gehäusedeckel
- 26: Unterteil
- 27: Leistungselektronik
- 30: Lagerschild
- 31: Gehäusedeckel
- 32: Lüfterhaubengitter
- 33: Labyrinthdichtung
- 34: Wellendichtring
- 35: Kabelverschraubungen
- 40: Sensor
- 41: Magnet-Folie, die auf dem Lüfter aufgebracht ist
- 51: Vertiefungen für Labyrinthdichtung
- 52: Knockout
- 53: Ausnehmungen
- 61: Dichtung
- 62: Knockout
- 63: Lagerschild
- 64: Klemmenkasten
- 91: Unterteil

## Patentansprüche

1. Elektromotor, umfassend zumindest einen Stator (6), einen Rotor (9), ein Gehäuse (15), eine Bremse (3, 5) und/oder einen Lüfter (12, 13),
wobei das Gehäuse (15) mindestens eine erste mechanische Schnittstelle (17) aufweist, die zum Verbinden mit einem Lagerschild (1) worgesehen ist,
wobei das Lagerschild (1) zumindest einen Lagersitz für das B-seitige Lager (10) der Rotorwelle (7) umfasst,
wobei das Lagerschild eine weitere Schnittstelle zur Verbindung mit einem Unterteil (4, 26) umfasst,
wobei das Lagerschild gehäusebildend für die Bremse (3, 5) und/oder den Lüfter (12, 13) ist,
wobei Unterteil (4, 26) eine Schnittstelle zur Verbindung mit einem Deckel (14, 25) aufweist,
wobei das Unterteil (4, 26) gehäusebildend für zumindest eine Leistungselektronik (27) ist, deren Wärme direkt oder zumindest indirekt an das Unterteil (4) abführbar ist,
wobei das Unterteil (4, 26) derart wärmeleitend mit dem Lagerschild verbunden ist, dass Wärme der Leistungselektronik (27) vom Lagerschild an die Umgebungsluft abführbar ist,
**wobei das Lagerschild Anschlussvorrichtungen (22) und/oder Zentriervorrichtungen aufweist für weitere, axial B-seitig anordenbare Geräte oder Vorrichtungen (40, 41),**
**wobei die Geräte oder Vorrichtungen mindestens eine drehende Komponente (41) umfassen, die mit der Rotorwelle (7) des Elektromotors direkt oder indirekt verbunden ist und im Bereich des Umfangs des Lüfters detektierbar ist, und mindestens eine nichtdrehende Komponente (40), die mit dem Lagerschild verbunden ist und/oder an diesem zentriert ist,**
**wobei die Geräte oder Vorrichtungen Winkelsensoren sind, insbesondere feinauflösende Winkelsensoren 40.**

2. Elektromotor nach mindestens einem der vorangegangenen Ansprüche,
**dadurch gekennzeichet, dass**
eine Dichtung (17) zwischen Lagerschild und dem Stator zugeordneten Gehäuse (15) vorgesehen ist.

3. Elektromotor nach mindestens einem der vorangegangenen Ansprüche,
**dadurch gekennzeichnet, dass**
die Leistungselektronik (27) zur Wärmeabfuhr mit dem auf dem Unterteil (4) aufgesetzten Deckel (14) wärmeleitend verbunden ist, insbesondere an einer dafür vorgesehenen Kontaktfläche.

4. Elektromotor nach mindestens einem der vorangegangenen Ansprüche,
**dadurch gekennzeichnet, dass**
der Deckel (14) über das Unterteil mit dem Lagerschild (1) wärmeleitend verbunden ist zur Abfuhr von Wärme der Leistungselektronik (27) an die Umgebung.

5. Elektromotor nach mindestens einem der vorangegangenen Ansprüche,
dadurch **gekennzeichet,** dass
das Lagerschild (1) gehäusebildend ist für einen Lüfter (12, 13), dessen Luftstrom zumindest zur Kühlung des Lagerschildes vorgesehen ist.

6. Elektromotor nach mindestens einem der vorangegangenen Ansprüche,
**dadurch gekennzeichnet, dass**
das Lagerschild (1) gehäusebildend ist für eine Bremse (3, 5).

7. Elektromotor nach mindestens einem der vorangegangenen Ansprüche,
**dadurch gekennzeichnet, dass**
das Lagerschild (1) zur Abführung von Wärme an die Umgebung geeignet ausgeführt ist.

8. Elektromotor nach mindestens einem der vorangegangenen Ansprüche,
**dadurch gekennzeichnet, dass**
das Lagerschild (1) Ausnehmungen (53) aufweist, durch welche ein Kühlluftstrom hindurchleitbar ist.

9. Elektromotor nach mindestens einem der vorangegangenen Ansprüche,
**dadurch gekennzeichnet, dass**
das Lagerschild (1) derart geformt ist, dass es zur Luftführung eines Lüfter-Luftstroms geeignet ausgebildet ist, insbesondere des Luftstroms desjenigen Lüfters (12, 13), für welchen das Lagerschild gehäusebildende Funktion aufweist.

10. Elektromotor nach mindestens einem der vorangegangenen Ansprüche,
**dadurch gekennzeichnet, dass**
das Unterteil (4, 26) und der Deckel (14) gehäusebildende Funktion für einen Sensor (40) aufweisen, wobei der Sensor zur Detektion mindestens einer physikalischen Eigenschaft eines drehbar gelagerten Teils (41) des Elektromotors vorgesehen ist, insbesondere des Lüfterflügels.

11. Elektromotor nach mindestens einem der vorangegangenen Ansprüche,
**dadurch gekennzeichnet, dass**
zumindest das erste Lagerschild (1) eine fein bearbeitete Kontaktfläche zur wärmeleitenden Verbindung mit der Leistungselektronik (27) aufweist.

12. Elektromotor nach mindestens einem der vorangegangenen Ansprüche,
**dadurch gekennzeichnet, dass**
die Leistungselektronik (27) mit dem Lagerschild (1) wärmeleitend zur Abfuhr von Wärme an die Umgebung verbunden ist.

13. Elektromotor nach mindestens einem der vorangegangenen Ansprüche,
**dadurch gekennzeichnet, dass**
ein Lagerschild (1) mit einem Sensor (40) ausgeführt ist, der am Umfang des Lüfters physikalische Eigenschaften des Lüfters oder einer mit diesem verbundenen Komponente detektiert.

14. Elektromotor nach mindestens einem der vorangegangenen Ansprüche,
**dadurch gekennzeichnet, dass**
ein Lagerschild (1) gehäusebildend ist für eine elektromagnetisch betätigbare Bremse (3, 5) und/oder einen Lüfter (12, 13).

## Claims

1. An electric motor, comprising at least a stator (6), a rotor (9), a housing (15), a brake (3, 5) and/or a fan (12, 13),
wherein the housing (15) has at least a first mechanical interface (17) which is provided for connection to a bearing shield (1),
wherein the bearing shield (1) comprises at least one bearing seat for the non-drive-end bearing (10) of the rotor shaft (7),
wherein the bearing shield comprises a further interface for connection to a lower part (4, 26),
wherein the bearing shield forms a housing for the brake (3, 5) and/or the fan (12, 13), wherein [the] lower part (4, 26) has an interface for connection to a cover (14, 25), wherein the lower part (4, 26) forms a housing for at least one power electronics unit (27), the heat of which can be discharged directly or at least indirectly to the lower part (4),
wherein the lower part (4, 26) is connected in thermally conductive manner to the bearing shield in such a way that heat of the power electronics (27) can be discharged from the bearing shield to the ambient air,
wherein the bearing shield has connection devices (22) and/or centring devices for further apparatus or devices (40, 41) which can be arranged axially on the non-drive end,
wherein the apparatus or devices comprise at least one rotating component (41) which is connected directly or indirectly to the rotor shaft (7) of the electric motor and can be detected in the region of the periphery of the fan, and at least one non-rotating component (40) which is connected to the bearing shield and/or is centred thereon,
wherein the apparatus or devices are angular sensors, in particular fine-resolution angular sensors (40).

2. An electric motor according to at least one of the preceding claims,
**characterised in that**
a seal (17) is provided between the bearing shield and the housing (15) associated with the stator.

3. An electric motor according to at least one of the preceding claims,
**characterised in that**
the power electronics (27) are connected in thermally conductive manner for heat discharge to the cover (14) which is placed on the lower part (4), in particular on a contact surface provided for that purpose.

4. An electric motor according to at least one of the preceding claims,
**characterised in that**
the cover (14) is connected via the lower part to the bearing shield (1) in thermally conductive manner for discharging heat of the power electronics (27) to the surroundings.

5. An electric motor according to at least one of the preceding claims, **characterised in that**
the bearing shield (1) forms a housing for a fan (12, 13), the airflow of which is intended at least for cooling the bearing shield.

6. An electric motor according to at least one of the preceding claims, **characterised in that**
the bearing shield (1) forms a housing for a brake (3, 5).

7. An electric motor according to at least one of the preceding claims,
**characterised in that**
the bearing shield (1) is embodied suitably for discharging heat to the surroundings.

8. An electric motor according to at least one of the preceding claims,
**characterised in that**
the bearing shield (1) has cutouts (53) through which a cooling airflow can be passed.

9. An electric motor according to at least one of the preceding claims,
**characterised in that**
the bearing shield (1) is shaped such that it is formed suitably for air guidance of a fan airflow, in particular the airflow of that fan (12, 13) for which the bearing shield has a housing-forming function.

10. An electric motor according to at least one of the preceding claims,
**characterised in that**
the lower part (4, 26) and the cover (14) have a housing-forming function for a sensor (40), the sensor being provided for detecting at least one physical property of a rotatably mounted part (41) of the electric motor, in particular of the fan blade.

11. An electric motor according to at least one of the preceding claims, **characterised in that**
at least the first bearing shield (1) has a precision-machined contact surface for thermally conductive connection to the power electronics (27).

12. An electric motor according to at least one of the preceding claims, **characterised in that**
the power electronics (27) are connected to the bearing shield (1) in thermally conductive manner for discharging heat to the surroundings.

13. An electric motor according to at least one of the preceding claims,
**characterised in that**
a bearing shield (1) is embodied with a sensor (40) which on the periphery of the fan detects physical properties of the fan or of a component connected thereto.

14. An electric motor according to at least one of the preceding claims,
**characterised in that**
a bearing shield (1) forms a housing for an electromagnetically actuatable brake (3, 5) and/or a fan (12, 13).

## Revendications

1. Moteur électrique comprenant au moins un stator (6), un rotor (9), un carter (15), un frein (3, 5) et/ou un ventilateur (12, 13),
ledit carter (15) présentant au moins un premier interface mécanique (17) prévu pour la liaison avec un bouclier de palier (1),
le bouclier de palier (1) comportant au moins un siège destiné au roulement (10) situé côté B de l'arbre rotorique (7),
ledit bouclier de palier présentant un interface supplémentaire, en vue de la liaison avec une partie inférieure (4, 26),
ledit bouclier de palier constituant un carter affecté au frein (3, 5) et/ou au ventilateur (12, 13),
la partie inférieure (4, 26) étant dotée d'un interface, en vue de la liaison avec un capot (14, 25),
la partie inférieure (4, 26) constituant un carter affecté à au moins une électronique de puissance (27) dont la chaleur peut être cédée directement, ou au moins indirectement, à ladite partie inférieure (4),
ladite partie inférieure (4, 26) étant en liaison thermiquement conductrice avec le bouclier de palier, de façon telle que de la chaleur de l'électronique de puissance (27) puisse être cédée à l'air ambiant, par ledit bouclier de palier,
ledit bouclier de palier étant pourvu de dispositifs de raccordement (22) et/ou de dispositifs de centrage destinés à des appareils ou dispositifs (40, 41) supplémentaires, pouvant être implantés axialement côté B,
lesdits appareils ou dispositifs incluant au moins un composant rotatif (41) qui est relié, directement ou indirectement, à l'arbre rotorique (7) dudit moteur électrique et peut être détecté dans la région du pourtour du ventilateur, et au moins un composant non rotatif (40) relié au bouclier de palier, et/ou centré sur ce dernier,
lesdits appareils ou dispositifs étant des capteurs angulaires, en particulier des capteurs angulaires (40) à résolution fine.

2. Moteur électrique selon la revendication 1, **caractérisé par le fait qu'**une garniture d'étanchement (17) est prévue entre le bouclier de palier et le carter (15) affecté au stator.

3. Moteur électrique selon au moins l'une des revendications précédentes, **caractérisé par le fait que**
l'électronique de puissance (27) est en liaison thermiquement conductrice, notamment sur une surface de contact prévue à cette fin, avec le capot (14) mis en place sur la partie inférieure (4), en vue de la dissipation de chaleur.

4. Moteur électrique selon au moins l'une des revendications précédentes, **caractérisé par le fait que**
le capot (14) est en liaison thermiquement conductrice avec le bouclier de palier (1), par l'intermédiaire de la partie inférieure, en vue de dissiper de la chaleur de l'électronique de puissance (27) vers l'espace environnant.

5. Moteur électrique selon au moins l'une des revendications précédentes, **caractérisé par le fait que**
le bouclier de palier (1) constitue un carter affecté à un ventilateur (12, 13) dont le courant d'air est au moins prévu pour refroidir ledit bouclier de palier.

6. Moteur électrique selon au moins l'une des revendications précédentes, **caractérisé par le fait que**
le bouclier de palier (1) constitue un carter affecté à un frein (3, 5).

7. Moteur électrique selon au moins l'une des revendications précédentes, **caractérisé par le fait que**
le bouclier de palier (1) offre une réalisation appropriée pour céder de la chaleur à l'espace environnant.

8. Moteur électrique selon au moins l'une des revendications précédentes, **caractérisé par le fait que**
le bouclier de palier (1) comporte des évidements (53) pouvant être traversés par un courant d'air de refroidissement.

9. Moteur électrique selon au moins l'une des revendications précédentes, **caractérisé par le fait que**
le bouclier de palier (1) est configuré de manière à offrir une réalisation appropriée pour guider l'air d'un courant d'air de ventilateur, en particulier du courant d'air du ventilateur (12, 13) pour lequel ledit bouclier de palier remplit une fonction de constitution d'un carter.

10. Moteur électrique selon au moins l'une des revendications précédentes, **caractérisé par le fait que**
la partie inférieure (4, 26) et le capot (14) remplissent une fonction de constitution d'un carter affecté à un capteur (40), ledit capteur étant prévu pour détecter au moins une propriété physique d'une partie (41) dudit moteur électrique qui est montée à rotation, en particulier de la pale du ventilateur.

11. Moteur électrique selon au moins l'une des revendications précédentes, **caractérisé par le fait**
**qu'**au moins le premier bouclier de palier (1) présente une surface de contact à usinage précis, dédiée à la liaison thermiquement conductrice avec l'électronique de puissance (27).

12. Moteur électrique selon au moins l'une des revendications précédentes, **caractérisé par le fait**
**que** l'électronique de puissance (27) est en liaison thermiquement conductrice avec le bouclier de palier (1), en vue de céder de la chaleur à l'espace environnant.

13. Moteur électrique selon au moins l'une des revendications précédentes, **caractérisé par le fait**
**qu'**un bouclier de palier (1) est pourvu d'un capteur (40) détectant, sur le pourtour du ventilateur, des propriétés physiques dudit ventilateur ou d'un composant relié à ce dernier.

14. Moteur électrique selon au moins l'une des revendications précédentes, **caractérisé par le fait**
**qu'**un bouclier de palier (1) constitue un carter affecté à un frein (3, 5) actionnable en mode électromagnétique, et/ou à un ventilateur (12, 13).
